# EUROPÄISCHE PATENTANMELDUNG

(11) **EP 0 962 714 A2**
(43) Veröffentlichungstag der Anmeldung: **08.12.1999**
(21) Anmeldenummer: 99110520.6
(22) Anmeldetag: 01.06.1999
(51) Int. Cl.: F24D 19/10

(54) **Verfahren und Vorrichtung zur Regelung von Umwälzpumpen in den Sonnenkollektorkreisen von Solaranlagen mit Speicher**

(30) Priorität: 03.06.1998 DE 19824543
(71) Anmelder: SOLVIS Solarsysteme GmbH, 38122 Braunschweig (DE)
(72) Erfinder: Krause, Thomas Dipl.-Ing., 38302 Wolfenbüttel (DE); Terschüren, Klaus-Henning Dipl.-Ing., 38173 Evessen (DE)
(74) Vertreter: Einsel, Martin, Dipl.-Phys.

(57) **Zusammenfassung**

Die Erfindung betrifft ein Verfahren zur Regelung von Umwälzpumpen in den Solarkollektorkreisen von Solaranlagen mit Speicher. Bei dem Verfahren wird ein Temperaturwert (T3) im Bereich des Solarkollektors (10) gemessen. Ebenfalls wird ein Temperaturwert (T4) im Bereich des Speichers (20) gemessen. Die Differenz der Temperaturwerte (T3-T4) wird errechnet und mit einem vorgegebenen Wert (F) verglichen. Die Umwälzpumpe (30) wird im Standardfall mit einer konstanten Solldrehzahl (s) betrieben. Beim ersten Einschalten der Umwälzpumpe (30) wird eine minimale Solldrehzahl (s) eingestellt, die beim Überschreiten des vorgegebenen Wertes (F) durch die Differenz der Temperaturwerte (T3-T4) jeweils um eine Stufe erhöht wird.

## Beschreibung

Die Erfindung betrifft ein Verfahren und eine Vorrichtung zur Regelung von Umwälzpumpen in den Solarkollektorkreisen von Solaranlagen mit Speicher.

Der Einsatz von Umwälzpumpen in den Solarkollektorkreisen von Solaranlagen mit Speicher ist beispielsweise in der EP 0 781 969 A2 vorgeschlagen worden, dort mit einer Zahnradpumpe. Die Umwälzpumpe fördert eine Flüssigkeit aus einem Speicher, der üblicherweise im Keller eines Gebäudes angeordnet ist, zu einer Solarkollektoranlage, die sich entsprechend auf dem Dach des gleichen Gebäudes befindet und in der durch die Sonneneinstrahlung die Flüssigkeit erwärmt wird. Die gleiche Umwälzpumpe fördert die erwärmte Flüssigkeit dann wieder in den Speicher zurück. In dem Speicher wird die Wärme der Solarflüssigkeit über einen Wärmetauscher an das Speicherwasser abgegeben, das erwärmte Speicherwasser in einen oberen Bereich des Speichers eingeschichtet und dabei kältere Flüssigkeit aus dem Bodenbereich abgezogen.

Die Flüssigkeit ist im allgemeinen eine Mischung aus Glykol und Wasser, um im Winter ein Einfrieren der Flüssigkeit auf dem Dach des Gebäudes zu vermeiden. Die Viskosität dieser Mischung ist stark temperaturabhängig. Kann ein Einfrieren des Kollektorkreises durch konstruktive oder klimatische Bedingungen verhindert werden, so kann der Kollektorkreis auch direkt, also ohne Wärmetauscher mit dem Speichermedium betrieben werden.

Die Größe der Solarkollektorflächen kann sehr unterschiedlich ausfallen und liegt bei kleinen Solaranlagen typischerweise zwischen 3 und 12 m². Es gibt aber auch deutlich größere Solaranlagen.

Optimale Wirkungsgrade in solchen Anlagen erhält man, wenn der Volumenstrom im Kollektorkreis auf den Anlagentyp optimal abgestimmt ist, z. B. 10 bis 15 l/m²h bei Low-Flow-Anlagen oder zum Beispiel 40 l/m²h bei High-Flow-Anlagen. Damit ist gewährleistet, daß die Pumpe mit der optimalen Drehzahl arbeitet und unnötig Energieverbrauch an der Pumpe vermieden wird bei gleichzeitig optimalem Wirkungsgrad der Solaranlage.

Um nun diese konstante Drehzahl einzustellen, wird dies beim Einbau der Anlage durch den Heizungsmonteur manuell vorgenommen. Der Heizungsmonteur soll diese Einstellung unter Beachtung vieler Randbedingungen, wie beispielsweise die Größe des Solarkollektors, die Länge der Rohrleitungen, der aktuellen Temperatur bzw. Viskosität der Solarflüssigkeit durchführen. Stellt er hierbei die Drehzahl der Pumpe zu hoch ein, wird diese zukünftig nicht optimal, sondern mit zu hoher Pumpenenergie laufen. Stellt er sie zu niedrig ein, führt dies zu Funktionsstörungen. Tatsächlich kommen beide Fälle in der Praxis vor und führen zu Reklamationen. Eine fest vorgegebene, werkseitig voreingestellte Drehzahl ist nicht möglich, da die Größe der Solarkollektorfläche auf dem Dach bei jeder Solaranlage anders bemessen ist. Je größer diese Fläche ist, desto mehr Flüssigkeit muß und kann ja auch umgewälzt werden, da um so mehr warme bzw. heiße Flüssigkeit erzeugt wird.

Aufgabe der Erfindung ist es, ein Verfahren und eine Vorrichtung zur Regelung von Umwälzpumpen in den Solarkollektorkreisen von Solaranlagen mit Speicher vorzuschlagen, bei der Fehleinstellungen weitmöglichst vermieden werden.

Diese Aufgabe wird durch ein Verfahren gelöst,
- bei dem ein Temperaturwert (T3) im Bereich des Solarkollektors gemessen wird,
- bei dem ein Temperaturwert (T4) im Bereich des Speichers (20) gemessen wird,
- bei dem die Differenz der Temperaturwerte (T3 - T4) errechnet und mit einem vorgegebenen Wert (F) verglichen wird,
- bei dem die Umwälzpumpe im Standardfall mit einer konstanten Solldrehzahl (s) betrieben wird,
- bei dem beim ersten Einschalten eine minimale Solldrehzahl (s) eingestellt ist,
- bei dem beim Überschreiten des vorgegebenen Wertes (F) durch die Differenz der Temperaturwerte (T3 - T4) die Solldrehzahl (s) erhöht wird,
- bei dem die erhöhte Solldrehzahl die vorher eingestellte Solldrehzahl ersetzt.

Mit einem solchen Verfahren wird nun überraschend das Problem vollständig gelöst. Nach dem Einbau und erstmaligen Inbetriebnehmen der Anlage mit der Umwälzpumpe arbeitet die Umwälzpumpe zunächst auf einer niedrigsten möglichen voreingestellten Drehzahl. Stellt sich dabei nach einer gewissen Zeit des Laufens durch Temperaturvergleich heraus, daß die von dem Solarkollektor zur Verfügung gestellte und in den Speicher geförderte Flüssigkeit wesentlich heißer ist, als die Flüssigkeit in dem Speicher, so läuft offensichtlich die Umwälzpumpe zu langsam, denn es steht ja offensichtlich mehr heiße Flüssigkeit im Solarkollektor zur Verfügung und könnte daher schneller in den Speicher gefördert werden. Die Regelung erhöht daher die Solldrehzahl der Umwälzpumpe.

Nach erneutem Abwarten einer bestimmten Zeitspanne wird wieder verglichen, ob der vorgegebene Differenzwert immer noch überschritten ist. Ist dies der Fall, wird die Solldrehzahl weiter heraufgesetzt und so fort.

Durch das schnellere Fördern der Flüssigkeit durch die Umwälzpumpe sinkt die Temperatur oben am Kollektorausgang, da innerhalb des Kollektors weniger Zeit zur Erhitzung des in dem Kollektor befindlichen Mediums zur Verfügung steht. Zugleich wird die Temperatur in dem Speicher auch in dessen kälterem Bereich tendenziell zunehmen, da ständig kalte Flüssigkeit in Richtung zum Wärmetauscher bzw. zum Solarkollektor abgezogen und warme Flüssigkeit zugeführt wird. Sowie die Spreizung, also der Differenzwert, unter einen vorgegebenen Grenzwert fällt, wird die Solldrehzahl der Umwälzpumpe nicht mehr weiter erhöht.

Die Anlage behält diese Regelung jedoch bei. Wird jahreszeitlich bedingt die Außentemperatur höher und das Wetter sonniger, kann es dazu kommen, daß die Solldrehzahl sich weiter erhöht, bis die maximale Solldrehzahl erreicht ist, die für optimale Solarkollektornutzung bei gutem Wetter geeignet ist. Dieses ist die gewünschte Solldrehzahl, die dann endgültig beibehalten wird.

Diese Solldrehzahl wird nicht bei schlechter werdendem Wetter gesenkt. Im Standardfall läuft die Umwälzpumpe mit dieser optimalen Drehzahl oder sie steht. Die Drehzahl ist optimal eingestellt, gerade eben so hoch, daß den Randbedingungen an die Funktionstüchtigkeit mit optimalem Wirkungsgrad genügt wird.

Die Regelung stellt also selbstlernend den optimalen Betriebspunkt, daß heißt die optimale Drehzahlstufe der Pumpe ein.

Ein vorteilhafter Effekt stellt sich zusätzlich bei Anlagen mit Verdrängerpumpen ein: Bei diesen ist die Geräuschentwicklung von der Drehzahl der Pumpen abhängig, eine Optimierung der Drehzahl hinsichtlich des Wirkungsgrades trägt daher zugleich zu einer Reduzierung der Geräuschentwicklung bei, so daß der Dämpfungsaufwand sich verringert.

Im folgenden wird anhand der Zeichnung ein Ausführungsbeispiel der Erfindung näher beschrieben. Es zeigt:

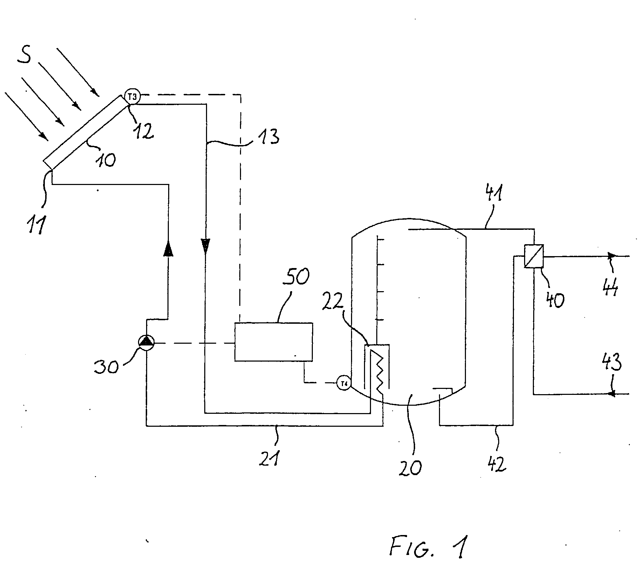

- **Figur 1**: eine schematische Darstellung einer Solaranlage, bei der das erfindungsgemäße Verfahren eingesetzt wird.

**Figur 1** zeigt in rein schematischer Form unter Weglassung hier nicht relevanter Teile eine Solaranlage.

Auf dem Dach des Gebäudes befindet sich ein Solarkollektor 10. Dieser Solarkollektor 10 befindet sich im Einfluß der Sonneneinstrahlung S, angedeutet durch gerichtete Pfeile. Innerhalb des Solarkollektors 10 befindet sich eine Flüssigkeit, die in erster Linie aus Wasser besteht, aber auch Glykolanteile und gegebenenfalls weitere Zusätze enthalten kann, um unter anderem Einfrieren zu vermeiden. Diese Flüssigkeit wird dem Solarkollektor an seinem Eingang 11 zugeführt und an seinem Ausgang 12 abgezogen. Die Temperatur T3 nahe dem Ausgang der Flüssigkeit wird zu einem später noch zu erläuternden Zweck gemessen.

Vom Ausgang 12 des Solarkollektors führt eine Flüssigkeitsleitung 13 in das Gebäude, beispielsweise dessen Keller, zu einem Speicher 20. Die Flüssigkeit 13 ist warm oder heiß, da sie ja zuvor im Solarkollektor 10 auf dem Dach des Gebäudes unter Einfluß der Sonneneinstrahlung S aufgeheizt worden ist. Die Wärme der Flüssigkeit wird im Inneren des Speichers 20 über einen Wärmetauscher 22 in dessen oberen Bereich abgegeben. Der Speicher 20 weist in seinem Inneren temperaturverteilte Flüssigkeit auf, wobei aufgrund der Dichteverteilung sich die heiße Flüssigkeit oben, die mäßig warme in der Mitte und die kalte Flüssigkeit unten befindet. Die Wärme der Flüssigkeit aus der Leitung 13 wird daher - da heiß - möglichst weit oben eingeschichtet, um Exergieverluste durch Vermischung innerhalb des Speichers 20 zu vermeiden. Es gibt verschiedene bekannte Möglichkeiten, die Höhe der Einschichtungen zu variieren, etwa temperaturabhängig von der Temperatur der einzuschichtenden Flüssigkeit.

Die dem Wärmetauscher 22 des Speichers 20 so zugeführte heiße Flüssigkeit wird abgekühlt und über die Leitung 21 dem Eingang 11 des Solarkollektors 10 wieder zugeführt.

Um den Umlauf der Flüssigkeit zu fördern, ist eine Umwälzpumpe vorgesehen, und zwar in der Leitung 21 vom Speicher 20 zum Solarkollektor 10. Es ist aus mehreren Gründen sinnvoll, die Umwälzpumpe in diesem Leitungszweig 21 und nicht in dem absteigenden Leitungszweig 13 vorzusehen. Zum einen ist der Leitungszweig 21 derjenige, in dem die Flüssigkeit aufwärts gefördert wird, zum zweiten ist es für den Betrieb der Umwälzpumpe 30 natürlich sinnvoll, wenn sie kalte Flüssigkeit und nicht heiße Flüssigkeit wie in dem anderen Leitungszweig 13 fördern muß.

Die Flüssigkeit in dem Speicher 20 kann Heizungswasser sein. Ein Heizungskreis kann natürlich ebenfalls angeschlossen sein, dieser ist hier nicht dargestellt. Lediglich schematisch ist gezeigt, daß aus dem heißesten Bereich des Speichers 20 eine Leitung 41 zu einem Wärmetauscher 40 und von dort eine weitere Leitung 42 wieder unten in den kalten Bereich des Speichers 20 führt. In dem Wärmetauscher 40 gibt die heiße Flüssigkeit einen Teil der in ihr enthaltenden Wärme an eine dort im Gegenstrom vorbeigeführte Flüssigkeit, insbesondere Trinkwasser, ab. Dieses Trinkwasser wird bei 43 kalt zugeführt und bei 44 erhitzt abgezogen.

Genausogut kann der Speicher 20 aber auch als Brauchwasserspeicher ausgebildet sein. Dann würde das kalte Trinkwasser unten zugeführt und das warme Wasser oben entnommen werden.

Die Temperatur T4 im unteren Bereich des Speichers 20 wird ebenfalls gemessen. Während die Temperatur T3 am Ausgang des Solarkollektors 10 die höchste, durch die Solarheizung zur Verfügung gestellte Temperatur angibt, ist die Temperatur T4 die kälteste im Speicher, die zugleich auch derjenigen am Eingang 11 des Solarkollektors 10 im wesentlichen entspricht.

Beide Temperaturen T3 und T4 werden einem Solarregler 50 zugeführt. Dieser Solarregler 50 hat nun verschieden Aufgaben und regelt insbesondere die Umwälzpumpe 30.

Die Umwälzpumpe 30 kann hinsichtlich ihrer Drehzahl stufenweise, also in diskreten Schritten, geschaltet werden.

Dabei läuft die Umwälzpumpe 30 im Dauerbetrieb mit einer konstanten Drehzahl, wenn sie im Betrieb ist. Sie fördert also dann, wenn dies aufgrund einer erhöhten Temperaturdifferenz zwischen der Kollektortemperatur und der Temperatur im Speicher 20 erforderlich ist. Angedeutet ist hier lediglich die Weitergabe der Temperatur T4 an den Solarregler 50, es können auch andere Daten, beispielsweise vom Wärmetauscher 40 oder den anderen Leitungen hier zugeführt werden.

Es ist sinnvoll, stets eine konstante Drehzahl in der Umwälzpumpe 30 zu haben, wenn diese in Betrieb ist. Ein nur langsames, dafür stetes Laufen der Umwälzpumpe 30 würde dazu führen, daß die Flüssigkeit nur sehr langsam durch die Leitungen 13 bzw. 21 fließt und unnötige Temperaturverluste entstehen.

Die konstante, gewünschte und angestrebte Drehzahl hängt davon ab, wie groß die Fläche des Solarkollektors 10 ist, wieviel heiße Flüssigkeit also überhaupt zur Verfügung gestellt werden kann. Auch andere Randumstände, wie die Länge der Leitungen oder die Art und Form des Wärmetauschers 22 im Speicher 20, ferner auch die geographische Lage des Gebäudes oder die Orientierung der Solarkollektorfläche zu den Himmelsrichtungen können hier einen Einfluß haben.

Das erfindungsgemäße Verfahren führt nun dazu, daß der Solarregler 50 aus den ihm zur Verfügung gestellten Daten die optimale Drehzahl für die Umwälzpumpe 30 selbst ermittelt, ohne das also manuell bestimmte zusätzliche Daten über den Solarkollektor eingegeben werden müßten.

Bei Erstinbetriebnahme nach Füllung der Anlage mit der Flüssigkeit läuft die Umwälzpumpe 30 zunächst auf der niedrigsten einstellbaren Stufe, also mit langsamer Drehzahl. Der Solarregler 50 überprüft dabei die Temperaturwerte T3 und T4 bzw. deren Differenz. Natürlich ist T3 der heiße, also der höhere Wert. Übersteigt die Differenz T3-T4 jedoch einen bestimmten, vorgegebenen Wert F, die sogenannte Spreizung, so folgert der Solarregler 50, daß der Solarkollektor 10 in der Lage ist, mehr heiße Flüssigkeit zur Verfügung zu stellen, als bei der voreingestellten Drehzahl der Umwälzpumpe 30 abgefordert wird. Er erhöht die Drehzahl der Umwälzpumpe 30 daher um eine Stufe, so daß die Flüssigkeit den Solarkollektor 10 auch schneller durchläuft, demnach weniger lange im Einflußbereich der Sonneneinstrahlung S ist, so daß tendenziell die Temperatur T3 abnimmt. Gleichzeitig wird schneller heiße Flüssigkeit dem Wärmetauscher des Speichers 20 zugeführt, so daß tendenziell die Temperatur T4 auch in dessen Bodenbereich zunimmt. Der Unterschied T3-T4 fällt dadurch.

Liegt diese Differenz nach einer vorgegebenen Warte- und Anpassungszeit aber immer noch oberhalb des vorgegebenen Wertes F für die Spreizung, so erhöht der Solarregler 50 erneut die Solldrehzahl der Umwälzpumpe 30 um eine Stufe und sofort.

Nach einiger Zeit wird der Wert F durch den Differenzbetrag T3-T4, also durch die Spreizung, nicht mehr überstiegen und der entsprechende Wert bleibt dann fest.

Allerdings kann es durch wechselnde Jahreszeiten noch durchaus sein, daß auch Wochen oder Monate später, beispielsweise an sonnigen Tagen im Hochsommer, der Differenzbetrag T3-T4 erneut den Wert F übersteigt und dann auch durchaus korrekt und beabsichtigt die Solldrehzahl nochmals um eine Stufe heraufgesetzt wird.

Der Solarregler 50 enthält außerdem noch einige weitere Schaltungsmöglichkeiten. So kann vorsorglich, für den Fall, daß aufgrund einer Fehlfunktion durch temporäre Erscheinungen oder ähnliches vorübergehend eine doch zu hohe Solldrehzahl eingestellt ist, eine Prüffunktion vorgesehen werden. Wird über einen bestimmten Zeitraum von beispielsweise 240 Tagen der Wert F abzüglich eines Toleranzmaßes nicht wieder erreicht, so führt der Solarregler 50 hinsichtlich der Solldrehzahl ein "reset" durch, daß heißt, er beginnt den gesamten Zyklus erneut bei der niedrigsten Stufe oder halbiert die gefundenen Werte, um von unten her erneut an die optimale Drehzahl heranzufahren.

Der vorgegebene Wert F für die Spreizung liegt bei etwa 15 bis 70 Kelvin und ist von der Bauart der Gesamtanlage abhängig.

Eine weitere Maßnahme ist, daß bei jedem Anlaufen nach Stillstand der Solarregler 50 die Umwälzpumpe kurzfristig mit maximaler Drehzahl laufen läßt. Dies führt dazu, daß der etwas höhere Anlaufwiderstand überwunden wird und zugleich auch verhindert wird, daß etwa sich in dem Flüssigkeitskreislauf befindliche Fremdpartikel die Umwälzpumpe 30 blockieren.

Eine weitere Maßnahme ist, ab einer bestimmten, vorgegebenen Temperatur T4 des Speichers, nämlich der Temperatur E, die Drehzahl der Pumpe über die gefundene Solldrehzahl zu erhöhen, um die Temperaturspreizung T3-T4 zu reduzieren und damit unerwünscht hohe Temperaturen, zum Beispiel von mehr als 95 °C, zu vermeiden. Diese Reduzierung kann z. B. auch in Abhängigkeit der Differenz des Temperaturwertes T4 und des vorgegebenen Wertes E, also (T4-E), erfolgen, ebenso ist aber auch eine Abhängigkeit zwischen T3 und E, also (T3-E), denkbar.

### Bezugszeichenliste

- 10: Solarkollektor
- 11: Eingang von 10
- 12: Ausgang von 10
- 13: Leitung von 10 nach 20
- 20: Speicher
- 21: Leitung von 20 nach 30
- 22: Wärmetauscher in 20
- 30: Pumpe
- 40: Wärmetauscher
- 41: Leitung von 20 nach 40
- 42: Leitung von 40 nach 20
- 43: Zufuhr kalten Trinkwassers
- 44: Abzug heißen Trinkwassers
- 50: Solarregler
- S: Sonneneinstrahlung
- T3: Temperatur bei 12
- T4: Temperatur bei 20

## Patentansprüche

1. Verfahren zur Regelung von Umwälzpumpen in den Solarkollektorkreisen von Solaranlagen mit Speicher,
- bei dem ein Temperaturwert (T3) im Bereich des Solarkollektors (10) gemessen wird,
- bei dem ein Temperaturwert (T4) im Bereich des Speichers (20) gemessen wird,
- bei dem die Differenz der Temperaturwerte (T3 - T4) errechnet und mit einem vorgegebenen Wert (F) verglichen wird,
- bei dem die Umwälzpumpe (30) im Standardfall mit einer konstanten Solldrehzahl (s) betrieben wird,
- bei dem beim ersten Einschalten eine minimale Solldrehzahl (s) eingestellt ist,
- bei dem beim Überschreiten des vorgegebenen Wertes (F) durch die Differenz der Temperaturwerte (T3 - T4) die Solldrehzahl (s) erhöht wird,
- bei dem die erhöhte Solldrehzahl die vorher eingestellte Solldrehzahl ersetzt.

2. Verfahren nach Anspruch 1,
**dadurch gekennzeichnet,**
**daß** die Solldrehzahl (s) in vorgegebenen, diskreten Schritten erhöht wird.

3. Verfahren nach Anspruch 1 oder 2,
**dadurch gekennzeichnet,**
**daß** die Umwälzpumpe (30) mit einer Drehzahlregelung in mehreren Stufen vorzugsweise von etwa 20 Stufen ausgebildet ist und daß die Erhöhung der Solldrehzahl (s) jeweils um eine solche Stufe erfolgt.

4. Verfahren nach einem der vorstehenden Ansprüche,
**dadurch gekennzeichnet,**
**daß** dann, wenn über einen längeren Zeitraum, insbesondere von mehr als 240 Tagen, der vorgegebene Wert (F) nicht überschritten und auch nicht innerhalb eines Toleranzpegels erreicht wird, die Solldrehzahl (s) wieder auf den minimalen Anfangswert zurückgestellt wird.

5. Verfahren nach einem der vorstehenden Ansprüche,
**dadurch gekennzeichnet,**
**daß** der vorgegebene Wert (F) bei etwa 15 bis 70 Kelvin liegt.

6. Verfahren nach einem der vorstehenden Ansprüche,
**dadurch gekennzeichnet,**
**daß** die Erhöhung der Solldrehzahl (s) jeweils nur dann erfolgt, wenn die Umwälzpumpe für einen Mindestzeitraum, insbesondere für mindestens 10 min, bei dem jeweils zuletzt eingestellten Wert gelaufen ist und der vorgegebene Wert (F) immer noch überschritten wird.

7. Verfahren nach einem der vorstehenden Ansprüche,
**dadurch gekennzeichnet,**
**daß** dann, wenn der Temperaturwert (T4) im Bereich des Speichers einen vorgegebenen Wert (E) überschreitet, die aktuelle Drehzahl über die konstante Solldrehzahl (s) hinaus um einen Wert erhöht wird, der von der Differenz des Temperaturwertes und des vorgegebenen Wertes (T4-E) abhängt.

8. Verfahren nach einem der vorstehenden Ansprüche,
**dadurch gekennzeichnet,**
**daß** die Umwälzpumpe bei jedem Anlaufen kurzfristig mit maximaler Drehzahl läuft, ehe sie auf die konstante Solldrehzahl (s) herunterfährt.

9. Vorrichtung zur Regelung von Umwälzpumpen in den Solarkollektorkreisen von Solaranlagen mit Speicher,
**dadurch gekennzeichnet,**
**daß** eine Regelungseinrichtung vorgesehen ist, die mit Temperaturmeßeinrichtungen im Bereich des Solarkollektors (10) und des Speichers (20) verbunden ist und eine stufenweise Umschaltung der Drehzahl der Umwälzpumpe ansteuert.
